Europäisches Patentamt

European Patent Office

Office européen des brevets

(19)

(11) **EP 0 732 670 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(51) Int Cl.$^6$: **G06T 7/20**

(21) Anmeldenummer: **96103736.3**

(22) Anmeldetag: **09.03.1996**

(54) **Verfahren und Schaltungsanordnung zur Unterabtastung bei Bewegungsschätzung**

Subsampling process and circuit in motion estimation

Procédé et circuit pour le sous-échantillonnage lors de l'estimation de mouvement

(84) Benannte Vertragsstaaten:
**DE FR GB IT**

(30) Priorität: **16.03.1995 DE 19509418**

(43) Veröffentlichungstag der Anmeldung:
**18.09.1996 Patentblatt 1996/38**

(73) Patentinhaber: **DEUTSCHE THOMSON-BRANDT GMBH**
**78048 Villingen-Schwenningen (DE)**

(72) Erfinder:
• **Drexler, Michael**
**30989 Gehrden (DE)**
• **Winter, Marco**
**30823 Garbsen (DE)**

(74) Vertreter: **Wördemann, Hermes, Dipl.-Ing.**
**Deutsche Thomson-Brandt GmbH,**
**Licensing & Intellectual Property,**
**Karl-Wiechert-Allee 74**
**30625 Hannover (DE)**

(56) Entgegenhaltungen:
**EP-A- 0 255 289**   **GB-A- 2 277 004**

• FREQUENZ, Bd. 47, Nr. 11/12, November 1993, BERLIN DE, Seiten 303-309, XP000426383 KLAUS HILDENBRAND ET AL.: "MOTION ESTIMATION IN THE HERMES VIDEOCODEC"
• IEEE TRANSACTIONS ON CONSUMER ELECTRONICS, Bd. 36, Nr. 3, August 1990, NEW YORK US, Seiten 395-402, XP000162866 ALAIN ARTIERI ET AL.: "A chip set core for image compression"

**Beschreibung**

Die Erfindung betrifft ein Verfahren und eine Schaltungsanordnung zur Unterabtastung bei Bewegungsschätzung

Stand der Technik

Bei der Speicherung oder Übertragung bewegter Bilder ist es häufig nötig, die große Menge an Informationen durch geeignete Kompressionsverfahren zu verringern. Hierfür werden Verfahren zur Bewegungsschätzung eingesetzt, die die Korrelationen zwischen den einzelnen Bildern ausnutzen.

Zur Abschätzung der Bewegung wird das zu codierende Bild in Blöcke aufgeteilt und jeder dieser Referenzblöcke mit gleich großen Blöcken innerhalb eines Teilbereiches eines vorangegangenen oder nachfolgenden Bildes, dem sogenannten Suchfenster, verglichen. Als Vergleichskriterium (Kostenfunktion) dient hierbei z.B. die Summe der Absolutwerte der Differenzen zwischen den Pixelwerten des Referenzblocks und den entsprechenden Pixelwerten des Suchfensters. Für jeden Referenzblock wird für den jeweils am besten übereinstimmenden Block des Suchfensters ein Bewegungsvektor ermittelt, der den in Pixel gerechneten Versatz dieser Blöcke angibt. Als Ergebnis dieser Bewegungsschätzung wird für die Bewegungskompensation des vollständigen Bildes nur das Referenzbild und für jeden Referenzblock der zugehörige Bewegungsvektor benötigt. Naturgemäß findet im allgemeinen keine exakte Rekonstruktion statt.

Bekannte Verfahren zur Bewegungsschätzung benutzen sämtliche Pixel des Referenzblocks und des Suchbereichs (full pel full search), um den optimalen Bewegungsvektor mit der kleinsten Kostenfunktion zu finden. Diese Methode erfordert aber sehr schnelle und damit teure Hardware.

In dem Artikel "Motion estimation in the Hermes Videocodec", Frequenz 47 (1993), Nr. 11/12, Seiten 303-309, wird eine Bewegungs-Schätzung mittels Block Matching beschrieben. Dabei ist erwähnt, daß von dem Referenzblock nur ein Teil der Bildpunkte verwendet werden kann, wobei die verwendeten Bildpunkte ein Quincunx-Unterabtastschema bilden.

Erfindung

Der Erfindung liegt die Aufgabe zugrunde, ein Verfahren zur Unterabtastung bei Bewegungsschätzung mit geringem Speicherbedarf und/oder geringer Bandbreite des Speichers bei gleichzeitig verläßlicher Ermittlung der kleinsten Kostenfunktion anzugeben. Diese Aufgabe wird durch das in Anspruch 1 angegebene Verfahren gelöst.

Der Erfindung liegt die weitere Aufgabe zugrunde, eine Schaltungsanordnung zur Anwendung des erfindungsgemäßen Verfahrens anzugeben. Diese Aufgabe wird durch die in Anspruch 4 angegebene Schaltungsanordnung gelöst.

Um die Rechenzeit und den Speicherbedarf bei der Bewegungsschätzung zu vermindern, kann man eine Unterabtastung des Referenzblocks und des Suchbereichs durchführen. Das Weglassen von einzelnen Spalten und/ oder Zeilen (orthogonale Unterabtastung) kann jedoch zu unbefriedigenden Ergebnissen führen, da unter Umständen nicht die Stelle mit der tatsächlich kleinsten Kostenfunktion und damit der richtige Bewegungsvektor gefunden wird.

Vorteilhaft läßt sich die Anzahl der falsch ermittelten Bewegungsvektoren bei vorgegebenem Grad der Unterabtastung dadurch deutlich verringern, daß statt der orthogonalen Unterabtastung eine Quincunx-Unterabtastung angewendet wird. Bei dieser werden in jeder folgenden Zeile bzw. Spalte die Pixel an den in der vorhergehenden Zeile bzw. Spalte ausgelassenen Positionen benutzt. Hierbei kann entweder der Referenzblock oder der Suchbereich eine feste Quincunx-Unterabtastung erfahren.

Wird für den Referenzblock eine feste Quincunx-Unterabtastung vorgenommen, so müssen in Abhängigkeit vom untersuchten Vektor mal die einen und mal die anderen Pixel des Suchbereiches benutzt werden. Obwohl jeweils nur die Hälfte der Pixel benutzt wird, müssen für die Suche sämtliche Pixel des Suchbereiches zur Verfügung stehen, der Suchbereichsspeicher muß also alle Pixel umfassen.

Vorteilhaft erfährt der Suchbereich eine feste Quincunx-Unterabtastung und beim Referenzblock werden, je nachdem welche Position untersucht wird, für gerade Parität des Bewegungsvektors die einen und für ungerade Parität die anderen quincunx-unterabgetasteten Pixel benutzt.

Im Prinzip besteht das erfindungsgemäße Verfahren zur Unterabtastung bei Bewegungsschätzung, bei der im zu codierenden Bild Referenzblöcke mit gleich großen Blöcken mindestens eines Bildes innerhalb eines Suchbereiches verglichen werden und daraus eine Bewegungsinformation für diese Referenzblöcke abgeleitet wird, daraus, daß im Suchbereich eine feste Unterabtastung verwendet wird und beim Referenzblock, je nachdem welche Blockposition untersucht wird, die entsprechend der Suchbereich-Pixelunterabtastung unterabgetasteten Pixel benutzt werden.

Vorteilhafte Weiterbildungen des erfindungsgemäßen Verfahrens ergeben sich aus den zugehörigen abhängigen Ansprüchen.

Im Prinzip ist die erfindungsgemäße Schaltungsanordnung für ein Verfahren zur Unterabtastung bei Bewegungsschätzung, bei der im zu codierenden Bild Referenzblöcke mit gleich großen Blöcken mindestens eines Bildes innerhalb eines Suchbereiches verglichen wird und daraus eine Bewegungsinformation für diese Referenzblöcke abgeleitet wird, in Teilschaltungen unterteilt, an welche die Suchbereichszeilen angelegt werden und welche die Abweichung der Pixelwerte der Suchbereichspixel von den Pixelwerten der Referenzpixel für jede der Suchbereichszeilen liefern, wobei an einem ersten Ausgang jeder Teilschaltung die Zeilenabweichung für Bewegungsinformationen gerader Parität und an einem zweiten Ausgang die Zeilenabweichung für Bewegungsinformationen ungerader Parität ausgegeben wird und wobei die Abweichung des gesamten Suchbereiches vom gesamten aktuellen Referenzblock in einer Addierstufe aus den Zeilenabweichungen und daraus die Bewegungsinformation für den Referenzblock berechnet wird.

Vorteilhafte Weiterbildungen der erfindungsgemäßen Schaltungsanordnung ergeben sich aus den zugehörigen abhängigen Ansprüchen.

## Zeichnungen

Anhand der Zeichnungen werden Ausführungsbeispiele der Erfindung beschrieben. Diese zeigen in:

Fig. 1     das Bewegungsschätzungverfahren bei einer erfindungsgemäßen Quincunx-Unterabtastung für Vektoren gerader Parität (a) und ungerader Parität (b),

Fig. 2     die Pixelanordnung im Referenzblock und Suchbereich bei einer Referenzblockgröße von 4*4 Pixel,

Fig. 3     ein Blockschaltbild einer Schaltungsanordnung für die herkömmliche Bewegungsschätzung (full pel full search),

Fig. 4     einen Ausschnitt der Schaltungsanordnung aus Fig. 3,

Fig. 5     einen Ausschnitt aus einer Schaltungsanordnung für Quincunx-Bewegungsschätzung,

Fig. 6     einen Ausschnitt aus einer von Fig. 5 abgewandelten Schaltungsanordnung

## Ausführungs-Beispiel

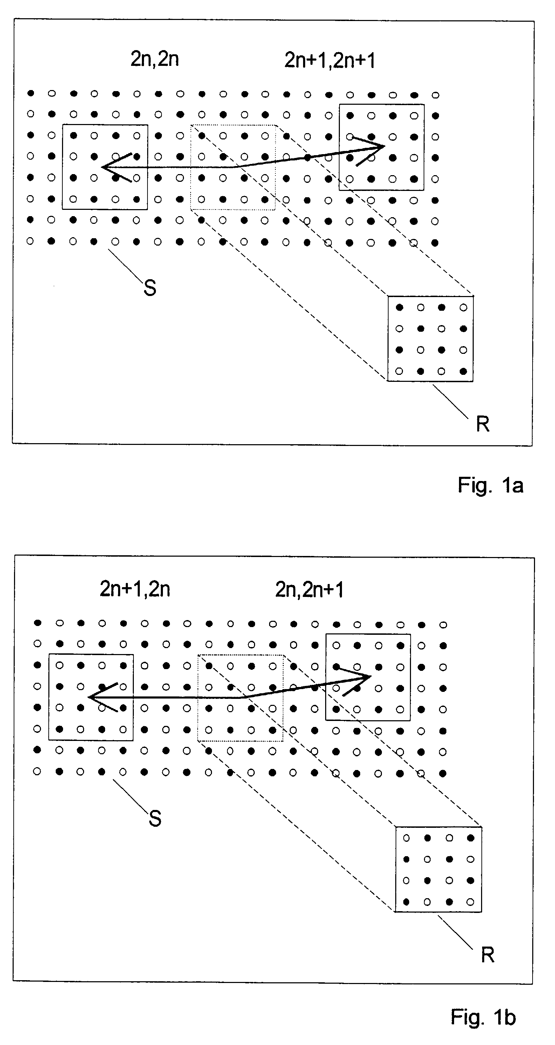

In Fig. 1 ist das erfindungsgemäße Verfahren zur Quincunx-Unterabtastung bei Bewegungsschätzung dargestellt, wobei die benutzten Pixel durch gefüllte Kreise und die unbenutzten Pixel durch leere Kreise symbolisert werden. Es werden in jeder folgenden Zeile bzw. Spalte die Pixel an den in der vorhergehenden Zeile bzw. Spalte ausgelassenen Positionen benutzt. Der Suchbereich **S** erfährt eine feste Quincunx-Unterabtastung, beim Referenzblock **R** dagegen werden, je nachdem welche Position untersucht wird, für gerade Parität des Bewegungsvektors die einen und für ungerade Parität die anderen quincunx-unterabgetasteten Pixel benutzt. Fig. 1a verdeutlicht dieses für Vektoren gerader Parität (der horizontale und der vertikale Vektoranteil sind entweder beide gerade oder beide ungerade), Fig. 1b für Vektoren ungerader Parität (ein Vektoranteil ist gerade, der andere ungerade).

Es müssen damit sämtliche Pixel des Referenzblocks **R** zur Verfügung stehen, dieses bedeutet jedoch keinen Nachteil, da sie für die anschließende Kompensation ohnehin benötigt werden. Für den Suchbereich **S** braucht man dagegen nur noch die Hälfte der Pixel abzuspeichern, die für die Bewegungsschätzung benötigt werden. Damit vermindert sich der Speicherbedarf und die Bandbreite des Speichers im Vergleich zu herkömmlichen Verfahren zur Bewegungsschätzung auf die Hälfte, so daß nur eine geringere Anzahl von außerdem billigeren Speicherbausteinen benötigt wird.

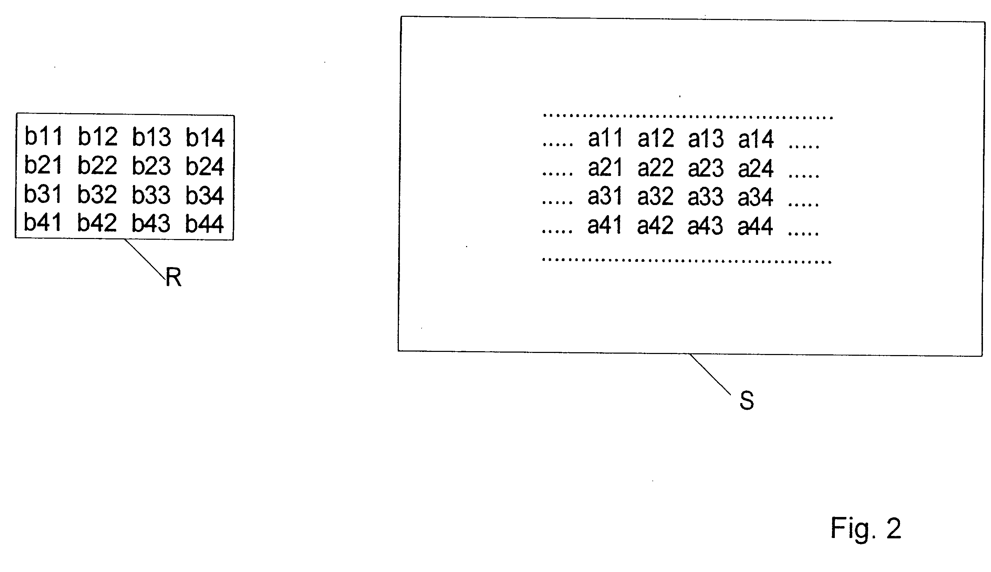

In eine Schaltung zur Bewegungsschätzung werden die einzelnen Pixel (a11, a12, a13,...) des Suchfensters **S** vorzugsweise von einem Ende des Suchbereichs zum anderen horizontal eingelesen. Die Pixel (b11, b12, b13,...) des Referenzblocks **R** werden dagegen während des gesamten Suchvorgangs permanent in der verwendeten Schaltung zur Bewegungsschätzung abgelegt. Der Einfachheit halber wird für den Referenzblock **R** im folgenden eine Blockgröße von 4*4 Pixel angenommen, wie in Fig. 2 dargestellt.

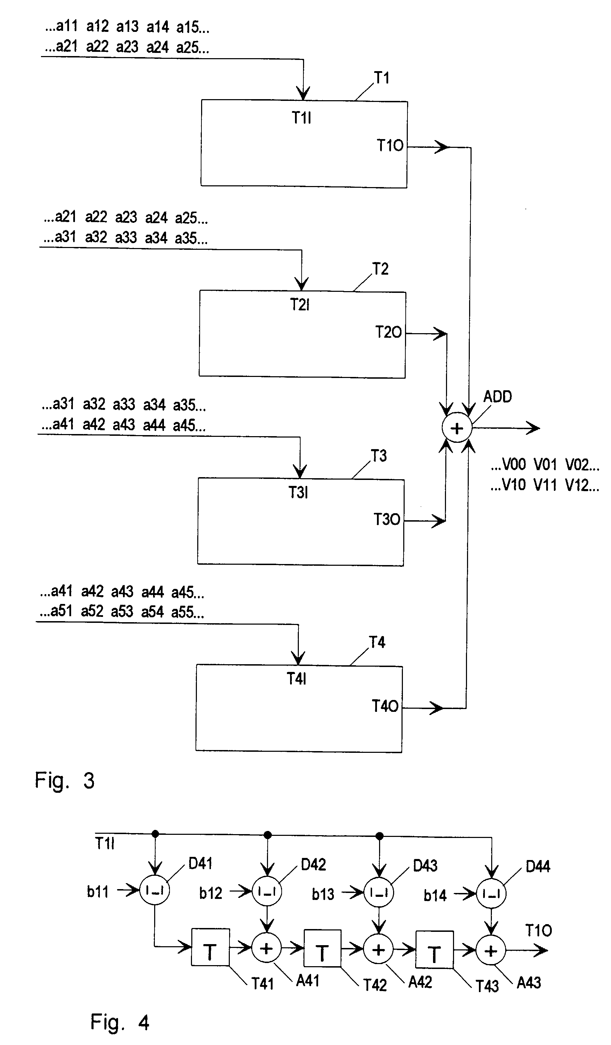

Fig. 3 zeigt ein Blockschaltbild einer Schaltungsanordnung zur herkömmlichen Bewegungsschätzung. Die Schaltungsanordnung ist in Teilschaltungen **T1** bis **T4** unterteilt, die jeweils zum Vergleich einer Suchbereichszeile mit einer der vier Zeilen des Referenzblocks dienen. Aus den Zeilenabweichungen wird dann in einer Addierstufe **ADD** die Abweichung des gesamten Suchbereichs vom gesamten aktuellen Referenzblock berechnet.

Fig. 4 zeigt die Funktionsweise einer Teilschaltung am Beispiel der Teilschaltung **T1**. Im ersten Takt liegt am Eingang **T1I** der Teilschaltung **T1** und damit an den absoluten Differenzgliedern **D41** bis **D44** das Suchbereichspixel $a_{11}$ an. In dem Differenzglied **D41**, an dem permanent an einem zweiten Eingang das Referenzpixel $b_{11}$ anliegt, wird nun die Pixelwertabweichung $|b_{11}-a_{11}|$ berechnet. In einem darauffolgenden Zeitglied **T41**, daß im allgemeinen ein Register ist, wird dieses Zwischenergebnis bis zum nächsten Takt gespeichert. Beim nächsten Takt wird nun das Suchbereichspixel $a_{12}$ in die Teilschaltung eingelesen. Mit Hilfe des Differenzglieds **D42**, an dem an einem zweiten Eingang das Referenzpixel $b_{12}$ anliegt, wird nun die Pixelwertabweichung $|b_{12}-a_{12}|$ berechnet. In einer ersten Addierstufe **A41** werden die Pixelwertabweichungen $|b_{11}-a_{11}|$ und $|b_{12}-a_{12}|$ addiert und in einem weiteren Zeitglied **T42** zwischengespeichert. Nach zwei weiteren Takten, bei denen die Suchbereichspixel $a_{13}$ und $a_{14}$ in die Teilschaltung eingelesen und entsprechend verarbeitet werden, liegt am Ausgang der Teilschaltung **T1O** die Pixelwertabweichung der gesamten Zeile $|b_{11}-a_{11}|+|b_{12}-a_{12}|+|b_{13}-a_{13}|+|b_{14}-a_{14}|$ an.

Die gleichen Verarbeitungsschritte erfolgen ebenso in den weiteren Teilschaltungen **T2**, **T3**, **T4**, sodaß nach einer Addition der Zeilenabweichugen in der Addierstufe **ADD** die Kostenfunktion

$$V_{00}= |b_{11}-a_{11}|+|b_{12}-a_{12}|+|b_{13}-a_{13}|+|b_{14}-a_{14}|+|b_{21}-a_{21}|+|b_{22}-a_{22}|+...+|b_{44}-a_{44}|$$

vorliegt. Nach dem nächsten Takt steht dann die Kostenfunktion

$$V_{01}= |b_{11}-a_{12}|+|b_{12}-a_{13}|+|b_{13}-a_{14}|+|b_{14}-a_{15}|+|b_{21}-a_{22}|+|b_{22}-a_{23}|+...+|b_{44}-a_{45}|$$

für den um ein Pixel horizontal verschobenen Suchbereichsblock zur Verfügung. Nachdem der Referenzblock horizontal vollständig über den Suchbereich verschoben worden ist, werden im nächsten Durchgang die Suchbereichspixel wieder horizontal gescannt und durch die Schaltung verarbeitet, jetzt aber um ein Pixel vertikal versetzt. Damit ergibt sich zum Beispiel für den Fall, daß in die Teilschaltung **T1** die Suchbereichspixel $a_{21}$ bis $a_{24}$ und in die Teilschaltungen **T2** bis **T4** die entsprechenden Suchbereichspixel eingelesen werden, folgende Kostenfunktion:

$$V_{10}= |b_{11}-a_{21}|+|b_{12}-a_{22}|+|b_{13}-a_{23}|+|b_{14}-a_{24}|+|b_{21}-a_{31}|+|b_{22}-a_{32}|+...+|b_{44}-a_{54}|$$

Es werden nun so viele Durchgänge durchgeführt, wie es der vertikale Wertebereich der Vektoren angibt. Aus den zeitsequentiell anliegenden Kostenfunktionen am Ausgang kann dann einfach das Minimum ermittelt werden.

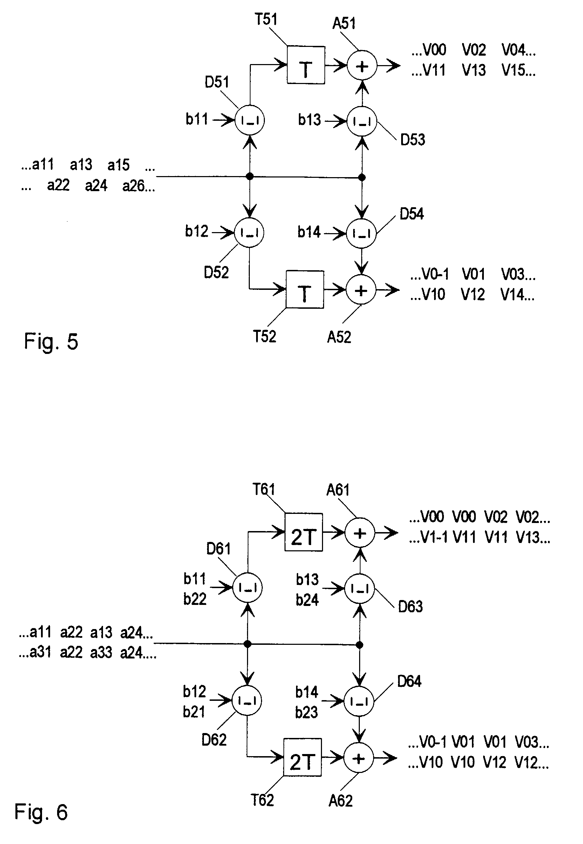

Eine erfindungsgemäße Teilschaltung mit Quincunx-Unterabtastung zeigt Fig. 5. Jede Teilschaltung weist nun zwei Ausgänge auf, je einen Ausgang für Vektoren gerader Parität und einen für Vektoren ungerader Parität. Die Pixel des jetzt quincunx-unterabgetasteten Suchbereichs gelangen mit halber Datenrate an die Differenzglieder **D51** bis **D54**. An den Differenzgliedern liegen jeweils am zweiten Eingang die Referenzblockpixel $b_{11}$ bis $b_{14}$ an, wobei im oberen Teil der Schaltung die einen quincunx-unterabgetasteten Referenzblockpixel und im unteren Teil die anderen abgelegt sind. Wird im ersten Takt das Suchbereichspixel $a_{11}$ eingelesen, so wird in dem Differenzglied **D51**, an dem permanent das Referenzpixel $b_{11}$ anliegt, die Pixelwertabweichung $|b_{11}-a_{11}|$ berechnet. In dem darauffolgenden Zeitglied **T51** wird dieses Zwischenergebnis bis zum nächsten Takt gespeichert. Beim nächsten Takt wird nun aufgrund der Quincunx-Unterabtastung das Suchbereichspixel $a_{13}$ eingelesen. Mit Hilfe des Differenzglieds **D53**, an dem das Referenzpixel $b_{13}$ anliegt, wird die Pixelwertabweichung $|b_{13}-a_{13}|$ berechnet. Diese wird in einer Addierstufe **A51** zu der vorher im Zeitglied **T51** gespeicherten Pixelwertabweichung $|b_{11}-a_{11}|$ addiert und über einen ersten Ausgang ausgelesen.

Die gleichen Verarbeitungsschritte erfolgen ebenso in den anderen Teilschaltungen. Nach einer Addition der Zeilenabweichungen liegt damit die Kostenfunktion

$$V_{00}=|b_{11}-a_{11}|+|b_{13}-a_{13}|+|b_{22}-a_{22}|+...+|b_{44}-a_{44}|$$

vor. Nach dem nächsten Takt werden die Zeilenabweichungen aus den zweiten Ausgängen ausgelesen, sodaß nach deren Addition die Kostenfunktion

$$V_{01}=|b_{12}-a_{13}|+|b_{14}-a_{15}|+|b_{21}-a_{22}|+...+|b_{43}-a_{44}|$$

für den um ein Pixel horizontal verschobenen Suchbereichsblock zur Verfügung steht.

Im nächsten Durchgang werden die Suchbereichszeilen wieder um ein Pixel vertikal versetzt, sodaß sich z.

B. folgende Kostenfunktion ergibt:

$$V_{10}=|b_{12}-a_{22}|+|b_{14}-a_{24}|+|b_{21}-a_{31}|+...+|b_{43}-a_{53}|.$$

Nachdem alle Durchgänge beendet sind kann dann aus den zeitsequentiell anliegenden Kostenfunktionen wieder das Minimum ermittelt werden.

Alternativ zeigt Fig. 6 eine Teilschaltung, die zwar mit gleicher Datenrate wie bei der herkömmlichen Bewegungsschätzung betrieben wird, wobei aber im Vergleich zu den vorherigen Schaltungsanordnungen nur die Hälfte der parallelen Teilschaltungen benötigt wird. Im Gegensatz zur Teilschaltung aus Fig. 5 werden hier die Suchbereichspixel zickzackförmig über zwei benachbarte Zeilen gescannt der Schaltung zugeführt und es liegen nun an jedem Differenzglied zwei Referenzblockpixel abgespeichert vor, zwischen denen taktsequentiell umgeschaltet wird. Wird im ersten Takt das Suchbereichspixel $a_{11}$ eingelesen, so wird in dem Differenzglied **D61**, an dem das Referenzpixel $b_{11}$ anliegt, die Pixelwertabweichung $|b_{11}-a_{11}|$ berechnet. In dem darauffolgenden Zeitglied **T61** wird dieses Zwischenergebnis bis zum übernächsten Takt gespeichert. Beim nächsten Takt wird nun das Suchbereichspixel $a_{22}$ eingelesen. Am Differenzglied **D61** liegt nun das Referenzpixel $b_{22}$ an, sodaß die Pixelwertabweichung $|b_{22}-a_{22}|$ berechnet wird. Dieses Zwischenergebnis wird nun ebenfalls für zwei Takte im Zeitglied **T61** gespeichert. Einen weiteren Takt später wird das Suchbereichspixel $a_{13}$ eingelesen. Gleichzeitig wird das zuerst abgelegte Zwischenergebnis $|b_{11}-a_{11}|$ aus dem Zeitglied ausgelesen und in einer Addierstufe **A61** zu dem Ergebnis $|b_{13}-a_{13}|$ addiert, welches daß Differenzglied **D63** liefert. Wiederum einen Takt später liefert das Zeitglied $|b_{22}-a_{22}|$ und das Differenzglied **D63** das Ergebnis $|b_{24}-a_{24}|$. Um den Wert für die Zeilenabweichung zu erhalten, wird dann die Summe dieser beiden Pixelabweichungen zu dem Wert addiert, den die Addierstufe **A61** beim vorherigen Takt geliefert hat. Die Kostenfunktion $V_{00}$ für den Bewegungsvektor ergibt sich dann wieder aus der Summe der Zeilenabweichungen der einzelnen Teilschaltungen.

Während des zuletzt genannten und des darauf folgenden Taktes werden gleichzeitig die Werte aus den zweiten Ausgängen ausgelesen, sodaß nach deren Addition die Kostenfunktion $V_{01}$ für den um ein Pixel horizontal verschobenen Suchbereichsblock zur Verfügung steht. Da im Vergleich zu Fig. 5 nur die Schaltungsanordnung verändert worden ist, die Unterabtastung aber gleich geblieben ist, ergeben sich hierbei die gleichen Werte wie bei der Verwendung der Teilschaltung aus Fig. 5.

Alternativ zu dem bisher genannten kann der Suchbereich auch auf ein Halbbild beschränkt werden. Bei dieser einseitigen Bewegungsschätzung wird dann nur ein Halbbildspeicher statt eines Bildspeichers benötigt.

Die Erfindung kann z.B. in Encodern für MPEG1, MPEG2 oder bei der Bildtelefoncodierung verwendet werden.

**Patentansprüche**

1. Verfahren zur Bewegungsschätzung für Bildpunkt-Blöcke, bei dem ein Referenzblock (R) jeweils mit verschiedenen Positionen eines gleich großen Blocks innerhalb eines Suchbereiches (S) in mindestens einem benachbarten Bild oder Halbbild verglichen wird und daraus eine Bewegungsinformation für den jeweiligen Referenzblock (R) abgeleitet wird und bei jedem einzelnen Vergleichs-Schritt nur die Hälfte der Bildpunkte des Referenzblocks verwendet wird und diese Bildpunkte quincunx-unterabgetastet sind, **dadurch gekennzeichnet,** daß aus dem Suchbereich (S) für die Vergleichs-Schritte nur die Hälfte der Bildpunkte gemäß einem festen Quincunx-Unterabtast-Raster verwendet wird und bei der Bewegungsschätzung von jedem Referenzblock (R) alle Bildpunkte dieses Referenzblocks verwendet werden, aber bei einem einzelnen Vergleichs-Schritt je nach zu vergleichender Position innerhalb des Suchbereiches (S) entweder die erste der zwei möglichen Positionen der quincunx-unterabgetasteten Bildpunkte des Referenzblocks oder die zweite dieser möglichen Positionen der quincunx-unterabgetasteten Bildpunkte des Referenzblocks verwendet wird.

2. Verfahren nach Anspruch 1, wobei die Suchbereichs-Bildpunkte horizontal gescannt werden.

3. Verfahren nach Anspruch 1, wobei die Suchbereichs-Bildpunkfe für zwei aufeinanderfolgende Zeilen oder Spalten zickzackförmig gescannt werden.

4. Vorrichtung zur Bewegungsschätzung für Bildpunkt-Blöcke, in der ein Referenzblock (R) jeweils mit verschiedenen Positionen eines gleich großen Blocks innerhalb eines Suchbereiches (S) in mindestens einem benachbarten Bild oder Halbbild verglichen wird und daraus eine Bewegungsinformation für den jeweiligen Referenzblock (R) abgeleitet wird und bei jedem einzelnen Vergleichs-Schritt nur die Hälfte der Bildpunkte des Referenzblocks verwendet wird und diese Bildpunkte quincunx-unterabgetastet sind, **gekennzeichnet** durch Teilschaltungen (T1-T4), wel-

EP 0 732 670 B1

chen für die Vergleichs-Schritte aus dem Suchbereich (S) Zeilen oder Spalten von Bildpunktwerten zugeführt werden und dabei nur die Hälfte der Bildpunkte gemäß einem festen Quincunx-Unterabtast-Raster verwendet wird, und welche die Abweichung der Suchbereichs-Bildpunktwerte von den Bildpunktwerten des Referenzblocks (R) für jede der Zeilen oder Spalten des Suchbereichs liefern, wobei für die einzelnen Blockpositionen die Summe der Abweichungen der gesamten aktuellen Zeilen oder Spalten des Suchbereichs von den gesamten Zeilen oder Spalten des Referenzblocks in einer Addierstufe (A51, A52; A61, A62) gebildet und daraus die Bewegungsinformation für den Referenzblock berechnet wird und bei der Bewegungsschätzung von jedem Referenzblock (R) alle Bildpunkte dieses Referenzblocks verwendet werden, aber bei einem einzelnen Vergleichs-Schritt je nach zu vergleichender Position innerhalb des Suchbereiches (S) entweder die erste der zwei möglichen Positionen der quincunx-unterabgetasteten Bildpunkte des Referenzblocks oder die zweite dieser möglichen Positionen der quincunx-unterabgetasteten Bildpunkte des Referenzblocks verwendet wird und die Abweichung der Zeilen oder Spalten für Bewegungsinformationen entsprechend an einem ersten Ausgang oder zweiten Ausgang jeder Teilschaltung ausgegeben wird.

5. Vorrichtung nach Anspruch 4, bei der die Teilschaltungen (T1-T4)

   - Mittel (D51-D54; D61-D64) zur Berechnung der Bildpunktwert-Abweichungen;
   - Zeitglieder (T51, T52; T61, T62) zur Zwischenspeicherung der Bildpunktwert-Abweichung;
   - und Addierstufen (A51, A52; A61, A62) zur Addition der Bildpunktwert-Abweichungen

   enthalten, wobei die quincunx-unterabgetasteten Referenzblock-Bildpunktwerte an den Mitteln zur Berechnung der Bildpunktwert-Abweichungen abgespeichert vorliegen und die quincunx-unterabgetasteten Suchbereichs-Bildpunkte an die Mittel zur Berechnung der Bildpunktwert-Abweichungen sequentiell angelegt werden.

6. Vorrichtung nach Anspruch 5, bei der jeweils zwei der Teilschaltungen miteinander kombiniert sind und an jedem Mittel (D51-D54; D61-D64) zur Berechnung der Bildpunktwert-Abweichungen zwei taktsequentiell umgeschaltete Referenzblock-Bildpunktwerte abgespeichert vorliegen und zwei aufeinanderfolgende Ausgabewerte für eine Bewegungsinformation addiert werden.

7. Vorrichtung nach Anspruch 5 oder 6, bei der als Mittel (D51-D54; D61-D64) zur Berechnung der Bildpunktwert-Abweichungen Absolutwert-Differenzglieder verwendet werden.

8. Vorrichtung nach einem der Ansprüche 5 bis 7, bei der als Zeitglieder (T51, T52; T61, T62) Register verwendet werden.

9. Verwendung des Verfahrens oder der Vorrichtung nach einem der vorhergehenden Ansprüche bei der MPEG1- oder MPEG2-Encodierung.

**Claims**

1. Method for movement estimation for pixel blocks wherein a reference block (R) is compared with different positions of a block of the same size within a search area (S) in at least one adjacent frame or field and a movement information item is derived for the respective reference block (R) and only half the pixels of the reference block is utilized at each individual camparison step these pixels being quincunx-undersampled, characterized in that only half the pixels are utilized from the search area (S) for the camparison steps according to a fixed quincunxundersampling raster and all pixels of this reference block are utilized from each reference block (R) at the movement estimation, wherein, however, at a single comparison step according to the respective position to be compared within the search area (S) there is utilized either the first of the two possible positions of the quincunx-undersampled pixels of the reference block or the second of said possible positions of the quincunx-undersampled pixels of the reference block.

2. Method according to claim 1, wherein the search area pixels are scanned horizontally.

3. Method according to claim 1, wherein the search area pixels for two successive lines or columns are scanned in a zigzag shape.

4. Apparatus for movement estimation for pixel blocks wherein a reference block (R) is compared with different po-

6

sitions of a block of the same size within a search area (S) in at least one adjacent frame or field and a movement information item is derived for the respective reference block (R) and only half the pixels of the reference block is utilized at each individual camparison step these pixels being quincunx-undersampled, characterized by partial circuits (T1-T4) to which lines or columns of pixel values are supplied for the comparison steps from the search area and only one half of the pixels is utilized according to a fixed quincunx undersampling raster and which partial circuits provide the deviation of the pixel values of the search areas from the pixel values of the reference block (R) for each of the lines or columns of the search area wherein the sum of the deviations of the entire actual lines or columns of the search area from the entire lines or columns of the reference block are produced in an adder stage (A51, A52; A61, A62) for the individual block positions and wherein the movement information item for the reference block is calculated therefrom and for each reference block (R) all pixels of this reference block are utilized for the movement estimation whereas, however either the first of the two possible positions of the quincunx-undersampled pixels of the referrence block or the second of said possible positions of the quincunx-undersampled pixels of the reference block at a single comparison step according to the respective position to be compared within the search area (S) are utilized and wherein the deviation of the lines or of the columns for the movement information items is output correspondingly at a first output or at a second output of each partial circuit.

5. Apparatus according to claim 4 wherein the partial circuits (T1-T4) include

   - means (D51-D54; D61-D64) for calculating the pixel-deviations,
   - timers (T51, T52; T61, T62) for buffer-storing the pixel deviation;
   - and adder stages (A51, A52; A61, A62) for adding said deviations of the pixel values

   wherein the quincunx-undersampled pixel values of the reference block are availably in a stored form at the means for calculating the deviations of the pixel values and wherein the quincunx-undersampled pixels of the search area are applied sequentially to the means for calculating the deviations of the pixel values.

6. Apparatus according to claims 5 wherein two of said partial circuits are in each case combined with one another, two reference block pixel values being switched sequentially with the clock cycle frequency are present in stored form in each means (D51-D54; D61-D64) for calculating the pixel value deviations, which reference block pixels are switched over sequentially in time with the clock, and two successive output values are added for a movement information item.

7. Apparatus according to claim 5 or 6, wherein absolute value subtractors are used as means (D51-D54; D61-D64) for calculating the pixel value deviation.

8. Apparatus according to anyone of claims 5 to 7, wherein registers are used as timers (T51, T52; T61, T62).

9. Employment of the method or of the apparatus according to anyone of the preceding claims for MPEG1- or MPEG2-encoding.


**Revendications**

1. Procédé d'estimation de mouvement pour les blocs de pixels, dans lequel un bloc de référence (R) fait à chaque fois l'objet d'une comparaison avec différentes positions d'un bloc de taille identique au sein d'un secteur de recherche (S) dans au moins une image ou une trame et une information de mouvement est obtenue pour chaque bloc de référence (R) à partir de cette comparaison et à chaque étape de la comparaison seule la moitié des pixels du bloc de référence est utilisée et ces pixels font l'objet d'un sous-échantillonnage Quincunx, **caractérisé en ce que** seule la moitié des pixels du secteur de recherche (S) est utilisée pour les différentes étapes de la comparaison selon un schéma de sous-échantillonnage Quincunx fixe et que, pour l'estimation de mouvement de chaque bloc de référence (R), tous les pixels de ce bloc de référence sont utilisés, mais que, pour chaque étape de comparaison, on utilise, selon la position à comparer au sein du secteur de recherche (S), soit la première des deux positions possibles des pixels du bloc de référence faisant l'objet du sous-échantillonnage Quincunx, soit la deuxième des deux positions possibles des pixels du bloc de référence faisant l'objet du sous-échantillonnage Quincunx.

2. Procédé conforme à la revendication 1, dans lequel les pixels du secteur de recherche sont scannés horizontalement.

3. Procédé conforme à la revendication 1, dans lequel les pixels du secteur de recherche pour deux lignes ou colonnes consécutives sont scannés en zigzag.

4. Dispositif d'estimation de mouvement pour blocs de pixels dans lequel un bloc de référence (R) fait à chaque fois l'objet d'une comparaison avec différentes positions d'un bloc de taille identique au sein d'un secteur de recherche (S) dans au moins une image ou une trame et une information de mouvement est obtenue pour chaque bloc de référence (R) à partir de cette comparaison et à chaque étape de la comparaison seule la moitié des pixels du bloc de référence est utilisée et ces pixels font l'objet d'un sous-échantillonnage Quincunx, **caractérisé en ce qu'**il comporte des circuits partiels (T1-T4) vers lesquels sont acheminées des lignes ou des colonnes de valeurs de pixels du secteur de recherche (S) pour les différentes étapes de la comparaison et que seule la moitié des pixels est utilisée selon un schéma de sous-échantillonnage Quincunx fixe et qui indiquent l'écart des valeurs de pixels du secteur de recherche par rapport aux valeurs de pixels du bloc de référence (R) pour chaque ligne ou colonne du secteur de recherche, où pour les différentes positions de bloc, la somme des écarts de l'ensemble des lignes ou colonnes actuelles du secteur de recherche est établie dans un étage d'addition (A51, A52, A61, A62) et à partir de laquelle l'information de mouvement pour le bloc de référence de recherche est calculée et où pour l'estimation de mouvement de chaque bloc de référence (R) tous les pixels de ce bloc de référence sont utilisés, mais à chaque étape de comparaison, en fonction de la position à comparer au sein du secteur de recherche (S), on utilise soit la première des deux positions possibles des pixels du bloc de référence faisant l'objet du sous-échantillonnage Quincunx, soit la deuxième des deux positions possibles des pixels du bloc de référence faisant l'objet du sous-échantillonnage Quincunx et l'écart des lignes ou colonnes pour les informations de mouvement est fourni à une première sortie ou à une deuxième sortie de chaque circuit partiel.

5. Dispositif conforme à la revendication 4 dans lequel les circuits partiels (T1-T4) comportent :

   - des moyens (D51-D54, D61-D64) de calcul des écarts de valeurs de pixels,
   - des éléments temporels (T51, T52, T61, T62) pour le stockage intermédiaire de l'écart de valeurs de pixels,
   - et des étages d'addition (A51, A52, A61, A62) pour l'addition des écarts de valeurs de pixels,

   où les valeurs de pixels du bloc de référence faisant l'objet du sous-échantillonnage Quincunx sont stockées au niveau des moyens de calcul des écarts de valeurs de pixels et les valeurs de pixels du secteur de recherche faisant l'objet du sous-échantillonnage Quincunx sont appliquées de façon séquentielle au niveau des moyens de calcul des écarts de valeurs de pixels.

6. Dispositif conforme à la revendication 5 dans lequel les circuits partiels sont combinés par deux respectivement et dans lequel deux valeurs de pixels du bloc de référence sont mémorisées de façon séquentielle en fonction du cycle au niveau de chaque moyen (D51-D54, D61-D64) de calcul des écarts de valeurs de pixels et deux valeurs de sortie consécutives sont ajoutées pour l'information de mouvement.

7. Dispositif conforme à la revendication 5 ou 6 dans lequel des éléments différentiels à valeur absolue sont utilisés comme moyens (D51-D54, D61-D64) de calcul des écarts de valeurs de pixels.

8. Dispositif conforme à l'une des revendications 5 à 7 dans lequel des registres sont utilisés comme éléments temporels (T51, T52, T61, T62).

9. Application du procédé ou du dispositif selon l'une des revendications précédentes pour le codage MPEG1 ou MPEG2.

Fig. 1a

Fig. 1b

a11 a12 a13 a14 ....
a21 a22 a23 a24 ....
a31 a32 a33 a34 ....
a41 a42 a43 a44 ....

S

b11 b12 b13 b14
b21 b22 b23 b24
b31 b32 b33 b34
b41 b42 b43 b44

R

Fig. 2

...a11 a12 a13 a14 a15...
...a21 a22 a23 a24 a25...

T1

T1I

T1O

...a21 a22 a23 a24 a25...
...a31 a32 a33 a34 a35...

T2

T2I

T2O

...a31 a32 a33 a34 a35...
...a41 a42 a43 a44 a45...

T3

T3I

T3O

ADD

+

...V00 V01 V02...
...V10 V11 V12...

...a41 a42 a43 a44 a45...
...a51 a52 a53 a54 a55...

T4

T4I

T4O

Fig. 3

T1I

D41    D42    D43    D44

b11    b12    b13    b14

T41    A41    T42    A42    T43    A43

T1O

Fig. 4

11

T51  A51

...V00 V02 V04...
...V11 V13 V15...

D51

b11 → |_|  b13 → |_| D53

...a11 a13 a15 ...
... a22 a24 a26...

b12 → |_|  b14 → |_| D54

D52

T +

...V0-1 V01 V03...
...V10 V12 V14...

T52  A52

Fig. 5

T61  A61

2T +

...V00 V00 V02 V02...
...V1-1 V11 V11 V13...

D61

b11
b22 → |_|  b13
b24 → |_| D63

...a11 a22 a13 a24...
...a31 a22 a33 a24....

b12
b21 → |_|  b14
b23 → |_| D64

D62

2T +

...V0-1 V01 V01 V03...
...V10 V10 V12 V12...

T62  A62

Fig. 6